# EUROPEAN PATENT SPECIFICATION

(11) **EP 4 417 940 B1**
(45) Date of publication and mention of the grant of the patent: **22.04.2026**
(21) Application number: 23887158.6
(22) Date of filing: 21.06.2023
(51) Int. Cl.: G01C 21/34, H01M 10/04, B60L 53/80

(54) **POSITIONING ADJUSTMENT METHOD AND APPARATUS, AND POSITIONING TOOL, DEVICE AND STORAGE MEDIUM**
POSITIONIERUNGSANPASSUNGSVERFAHREN, POSITIONIERUNGSWERKZEUG, VORRICHTUNG, VORRICHTUNG UND SPEICHERMEDIUM
PROCÉDÉ ET APPAREIL DE RÉGLAGE DE POSITIONNEMENT, OUTIL DE POSITIONNEMENT, DISPOSITIF ET SUPPORT DE STOCKAGE

(30) Priority: 31.12.2022 CN 202211735925
(43) Date of publication of application: 21.08.2024
(73) Proprietor: Zhuhai Titans New Power Electronics Co., Ltd, Zhuhai, Guangdong 519000 (CN)
(72) Inventor: WANG, Rui, Guangdong 519000 (CN); HUANG, Xinhua, Guangdong 519000 (CN); ZHOU, Li, Guangdong 519000 (CN)
(74) Representative: Petraz, Gilberto Luigi
(86) International application number: PCT/CN2023/101638
(87) International publication number: WO 2024/139089

(56) References cited:
- EP-A1- 3 705 356
- EP-A1- 3 708 445
- CN-A- 113 859 898
- CN-A- 116 147 648
- CN-U- 216 209 728
- CN-U- 216 387 145
- CN-U- 217 732 570
- CN-U- 218 004 991
- US-A1- 2021 034 032

## Description

This application claims priority to Chinese Patent Application No. 202211735925.1, filed with the Chinese Patent Office on December 31, 2022, entitled "POSITIONING ADJUSTMENT METHOD, POSITIONING TOOL, APPARATUS, DEVICE, AND STORAGE MEDIUM".

### TECHNICAL FIELD

The present application relates to the field of formation and capacity grading device technologies, and more particularly, to a positioning adjustment method, a positioning tool, an apparatus, a device, and a storage medium.

### BACKGROUND

A probe assembly and a negative pressure suction nozzle assembly are mounted at a positioning tool during use of a formation and capacity grading device to align the assemblies to respective positions of a battery for a subsequent operation. Every time a battery having a different size is replaced, it is necessary to move the probe assembly and the negative pressure suction nozzle assembly in respective stock positions within the positioning tool. However, this may require a large amount of human resources and cause operational errors. In the related art, a positioning shaft can be added to each of the stock positions to adjust the probe assembly and the negative pressure suction nozzle assembly to adapt them to different storage batteries, so that not only is a structure of the formation and capacity grading device more complex, its cost is increased, its installation and debugging are difficult, but also a higher hardware cost is generated.

EP3708445A1 discloses a battery swap transportation apparatus. The apparatus comprises one or more servo motors, a motor controller, a transportation body capable of being driven by the one or more servo motors to move in a predetermined direction, a motion controller and a position information feedback component, wherein the position information feedback component is configured to measure position information of the transportation body in the redetermined direction in real time and feed back the position information to the motion controller; and the motion controller is configured to control, in a closed loop manner, the motion of the transportation body in the predetermined direction based on the position information. The position information feedback component improves the precision of positioning control of the battery swap transportation apparatus and ensures successful battery swapping. Further provided is a method for positioning control of a battery swap transportation apparatus.

EP3705356A1 discloses a vehicle position adjustment system (100), a vehicle position adjustment method and a battery swap station. The vehicle position adjustment system (100) is used for a vehicle battery swap station, the vehicle position adjustment system (100) comprising: image acquisition devices (8), the image acquisition devices (8) being configured to face at least two feature holes in a chassis of a vehicle (200) whose position is to be adjusted, and are adapted to acquire images of the at least two feature holes; vehicle support and adjustment devices, which support the vehicle (200) at a battery swap platform (1) of the vehicle battery swap station, and are adapted to adjust the position of the vehicle (200); and a control device, which is communicatively connected to the image acquisition devices (8) and the vehicle support and adjustment devices, stores theoretical positions of the feature holes in the chassis of the vehicle (200), and is adapted to compare positions of the feature holes in the images with the theoretical positions and control the vehicle support and adjustment devices according to the difference therebetween so as to adjust the position of the vehicle (200).

### TECHNICAL SOLUTIONS

To solve at least one of the above technical problems, the present application provides a positioning adjustment method, a positioning tool, an apparatus, a device, and a storage medium. Technical solutions of the present application are as follows.

In a first aspect, the present application provides a positioning adjustment method, including:
determining start position information of an adjusted member;
determining target position information to determine a target movement distance based on the target position information and the start position information of the adjusted member, wherein the target position information is determined based on preset installation information of a target battery; and
moving the adjusted member to a target position based on the target movement distance;
wherein the determining of the start position information of the adjusted member includes:
   obtaining first positioning information and second positioning information, wherein the first positioning information is position information of one end of the adjusted member, and the second positioning information is position information of another end of the adjusted member;
   determining position difference information of the adjusted member based on the first positioning information and the second positioning information, wherein the position difference information is configured to indicate whether the one end and the another end of the adjusted member are aligned with each other;
   in response to the position difference information indicating that the one end and the another end of the adjusted member are not aligned with each other, correcting the adjusted member to align the one end and the another end of the adjusted member; and
   determining position information of the corrected adjusted member as the start position information of the adjusted member.

In some embodiments of the present application, the preset installation information includes center position information of the target battery, relative position information of both an operation member of the adjusted member and a positioning structure of the adjusted member, and relative position information of both an operation point of the target battery and a center of the target battery.

In some embodiments of the present application, a reference zero point is provided in a movement direction of the adjusted member and on one side of a movement range of the adjusted member.

In some embodiments of the present application, the determining of the target position information includes:
determining a first distance based on the reference zero point and the center position information of the target battery;
determining a second distance based on the relative position information of both the operation member and the positioning structurer;
determining a third distance based on the relative position information of both the operation point and the center; and
determining the target position information based on the first distance, the second distance, and the third distance.

In some embodiments of the present application, the determining of the target position information includes:
under a condition that a target operation point corresponding to the operation member of the adjusted member is one battery post located at a proximal end of the reference zero point and the operation member of the adjusted member is located on a side of the positioning structure away from the reference zero point, obtaining the target position information by subtracting both the second distance and the third distance from the first distance; or
under a condition that the target operation point corresponding to the operation member of the adjusted member is another battery post located at a distal end of the reference zero point and the operation member of the adjusted member is located on a side of the positioning structure close to the reference zero point, obtaining the target position information by summing the first distance, the second distance, and the third distance; or
under a condition that the target operation point corresponding to the operation member of the adjusted member is located between the center and one battery post located at the proximal end of the reference zero point and the operation member of the adjusted member is located on a side of the positioning structure close to the reference zero point, obtaining the target position information by subtracting the third distance from a sum of the first distance and the second distance.

In a second aspect, the present application provides a positioning tool, configured for adjusting an adjusted member to adapt the adjusted member to a battery position, where the positioning tool includes a plurality of positioning adjustment assemblies and a controller for:
controlling the positioning adjustment assemblies to move from a reference zero point to determine start position information of the adjusted member under a condition that the positioning adjustment assemblies detect the adjusted member;
determining target position information to determine a target movement distance based on the target position information and the start position information of the adjusted member, wherein the target position information is determined based on preset installation information of a target battery; and
controlling the positioning adjustment assemblies to move the adjusted member to a target position based on the target movement distance;
wherein the positioning adjustment assemblies include a first positioning adjustment assembly and a second positioning adjustment assembly, at least one of the positioning adjustment assemblies is correspondingly provided with driving assemblies, the driving assemblies include a first driving assembly and a second driving assembly respectively mounted on opposite sides of the positioning tool and respectively having a sensor, and both ends of the adjusted member are provided with a positioning structure, and the controller is further configured for:
   obtaining first positioning information and second positioning information, wherein the first positioning information is position information of one end of the adjusted member obtained in response to the sensor of the first positioning adjustment assembly detecting the positioning structure, and the second positioning information is position information of another end of the adjusted member obtained in response to the sensor of the second positioning adjustment assembly detecting the positioning structure;
   determining position difference information based on the first positioning information and the second positioning information, wherein the position difference information is configured to indicate whether the one end and the another end of the adjusted member are aligned with each other;
   in response to the position difference information indicating that the one end and the another end of the adjusted member are not aligned with each other, controlling the first driving assembly and the second driving assembly to drive respective positioning adjustment assemblies to move alone with the one end and the another end of the adjusted member for correction to align the one end and the another end of the adjusted member; and
   determining position information of the corrected positioning structure as the start position information of the adjusted member.

In some embodiments of the present application, the preset installation information includes center position information of the target battery, relative position information of both an operation member of the adjusted member and the positioning structure of the adjusted member, and relative position information of both an operation point of the target battery and a center of the target battery, a reference zero point is provided in a movement direction of the adjusted member and on one side of a movement range of the adjusted member, and the controller is further configured for:
determining a first distance based on the reference zero point and the center position information of the target battery;
determining a second distance based on the relative position information of both the operation member and the positioning structure;
determining a third distance based on the relative position information of both the operation point and the center; and
determining the target position information based on the first distance, the second distance, and the third distance.

In some embodiments of the present application, the controller is further configured for:
under a condition that a target operation point corresponding to the operation member of the adjusted member is one battery post located at a proximal end of the reference zero point and the operation member of the adjusted member is located on a side of the positioning structure away from the reference zero point, obtaining the target position information by subtracting both the second distance and the third distance from the first distance; or
under a condition that the target operation point corresponding to the operation member of the adjusted member is another battery post located at a distal end of the reference zero point and the operation member of the adjusted member is located on a side of the positioning structure close to the reference zero point, obtaining the target position information by summing the first distance, the second distance, and the third distance; or
under a condition that the target operation point corresponding to the operation member of the adjusted member is located between the battery center and one battery post located at the proximal end of the reference zero point and the operation member of the adjusted member is located on a side of the positioning structure close to the reference zero point, obtaining the target position information by subtracting the third distance from a sum of the first distance and the second distance.

In some embodiments of the present application, after the adjusted member is moved to the target position, the controller is further configured for:
determining start position information of a new adjusted member under a condition that the positioning adjustment assemblies detect the new adjusted member;
determining new target position information to determine a new target movement distance based on the new target position information and the start position information of the new adjusted member, wherein the new target position information is determined based on the preset installation information of the target battery; and
controlling the positioning adjustment assemblies to move the new adjusted member to a new target position based on the new target movement distance.

In some embodiments of the present application, after the adjusted member is moved to the target position by the positioning adjustment assemblies, the controller is further configured for:
controlling the positioning adjustment assemblies to be moved to the reference zero point;
in response to obtaining preset installation information of a new target battery, controlling the positioning adjustment assemblies to redetermine start position information of the adjusted member;
redetermining target position information to redetermine a target movement distance based on the redetermined start position information of the adjusted member and the redetermined target position information, wherein the redetermined target position information is determined based on the preset installation information of the new target battery; and
controlling the positioning adjustment assemblies to move the adjusted member to a new target position based on the redetermined target movement distance.

In a third aspect, the present application provides a positioning adjustment apparatus, including at least one control processor and a memory for communicating with the at least one control processor; where the memory stores thereon instructions executable by the at least one control processor that are executed by the at least one control processor to enable the at least one control processor to perform any of the positioning adjustment methods described above.

In a fourth aspect, the present application provides a formation and capacity grading device, including the positioning tool described in the second aspect or the positioning adjustment device described in the third aspect.

In a fifth aspect, the present application provides a computer readable storage medium storing thereon computer-executable instructions for enabling a computer to perform the positioning adjustment method described in the fourth aspect.

### Beneficial Effects

The embodiments of the present applications provide at least following beneficial effects: determining start position information of the adjusted member; determining the target position information to determine the target movement distance based on the target position information and the start position information of the adjusted member, where the target position information is determined based on preset installation information of a target battery; and moving the adjusted member to the target position based on the target movement distance. According to the technical solutions of the embodiments of the present application, automatic positioning and automatic movement of the adjusted member can be implemented. Since an installation position of the target battery is known and fixed, the accuracy of the target movement distance is ensured, so that an operation position of the target battery can be aligned after the adjusted member is moved to the target position, thereby effectively improving the working efficiency of the positioning tool, reducing device costs, and improving the installation and debugging performance of the device.

### BRIEF DESCRIPTION OF THE DRAWINGS

FIG. 1 shows a schematic diagram of an implementation environment of a positioning adjustment method according to some embodiments of the present application;
FIG. 2 shows a flowchart of a positioning adjustment method according to some embodiments of the present application;
FIG. 3 shows a flowchart of correction by a positioning tool according to some embodiments of the present application;
FIG. 4 shows a schematic diagram of correction by a positioning tool according to some embodiments of the present application;
FIG. 5 shows a flowchart of determining target position information according to some embodiments of the present application;
FIG. 6 shows a schematic diagram of determining a first distance, a second distance, and a third distance according to some embodiments of the present application;
FIG. 7 shows a flowchart of calculating target position information according to some embodiments of the present application;
FIG. 8 shows a schematic diagram of moving a negative electrode probe assembly according to some embodiments of the present application;
FIG. 9 shows a schematic diagram of moving a positive electrode probe assembly according to some embodiments of the present application;
FIG. 10 shows a schematic diagram of moving a negative pressure assembly according to some embodiments of the present application;
FIG. 11 shows a flowchart of moving the next adjusted member according to some embodiments of the present application;
FIG. 12 shows a flowchart of operations after replacement of a target battery according to some embodiments of the present application;
FIG. 13 shows a schematic structural diagram of a positioning adjustment apparatus according to some embodiments of the present application.

### DETAILED DESCRIPTION

Embodiments of the present application are described in detail below. Examples of the embodiments are shown in the drawings, in which the same or similar reference numerals indicate the same or similar components or components having the same or similar functions. The embodiments described below by reference to the accompanying drawings are exemplary and are merely illustrative of the present application and are not to be construed as limiting the present application.

In the description of the present application, it should be understood that orientations or position relationships referred to in the description of the orientation indicated by the terms "upper", "lower", "front", "rear", "left", "right" are based on orientations or position relationships illustrated in the drawings. The terms are used to facilitate and simplify the description of the present application, rather than indicate or imply that the devices or elements referred to herein are required to have specific orientations or be constructed or operate in the specific orientations. Accordingly, the terms should not be construed as limiting the present application.

In the description of the present application, several means one or more, more means two or more, greater than, less than, more than, etc., are to be understood as not including the present number, and above, below, within, etc., are to be understood as including the present number. If the terms "first", "second" are described for the purpose of distinguishing technical features only, it is not to be construed as indicating or implying relative importance or implicitly indicating the number of indicated technical features or implicitly indicating the order of the indicated technical features.

In the description of the present application, unless expressly defined otherwise, terms "arrangement", "installation", "connection", and the like are to be understood in a broad sense, and those skilled in the art may reasonably determine the specific meaning of the above terms in the present application in connection with the specific contents of the technical solution.

Embodiments of the present applications provide a positioning adjustment method and apparatus, a formation and capacity grading device, and a storage medium. The positioning adjustment method includes: determining start position information of an adjusted member; determining target position information, where the target position information is determined based on preset installation information of a target battery, and determining a target movement distance based on the target position information and the start position information of the adjusted member; moving the adjusted member to a target position based on the target movement distance. According to the technical solutions of the embodiments of the present application, automatic positioning and automatic movement of the adjusted member can be implemented. Since an installation position of the target battery is known and fixed, the accuracy of the target movement distance is ensured, so that an operation position of the target battery can be aligned after the adjusted member is moved to the target position, thereby effectively improving the working efficiency of a positioning tool.

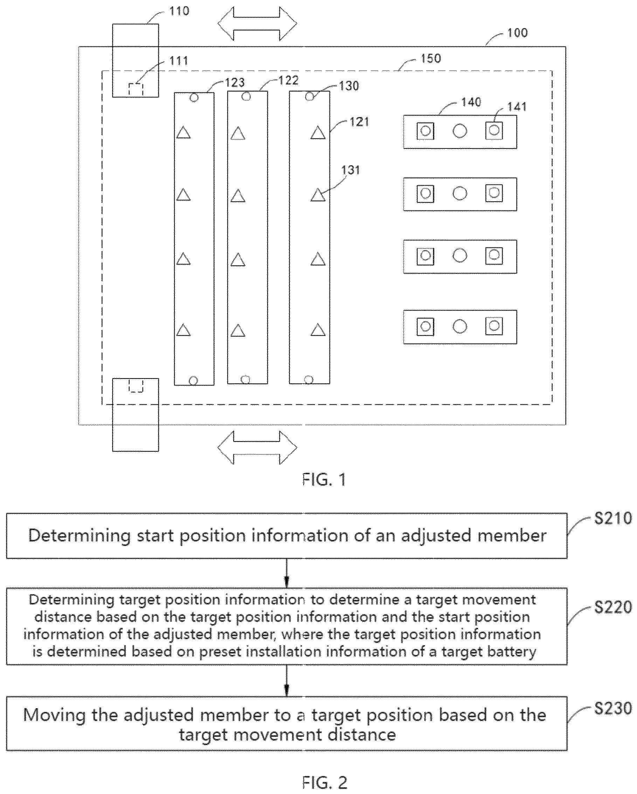

Referring to FIG. 1, FIG. 1 is a schematic diagram of an implementation environment of an embodiment of the present application. The implementation environment of the embodiment of the present application is provided with a positioning tool 100, a plurality of batteries to be operated, and a plurality of adjusted members. The positioning tool 100 includes a positioning adjustment assembly 110. At the same time, the positioning tool 100 can adjust the plurality of adjusted members to adapt to positions of operation points of the plurality of batteries to be operated 140. The structure shown in FIG. 1 is for ease of explanation of the implementation environment set forth in the technical solution of the present application, and does not limit a specific structure, a position, a shape, the number, and a size of the positioning tool 100 and the respective assemblies.

It should be noted that, since the size of each of the adjusted members is larger, two positioning adjustment assemblies 110 may be disposed, and separately provided with driving assemblies, which are respectively disposed on two opposite sides of the positioning tool 100 for driving the positioning adjustment assemblies 110 to move. Each of positioning adjustment assemblies110 is configured to position and drive one end of the adjusted member to move, so that an operation point of the adjusted member is adapted to an operation point position of respective one of the batteries to be operated. For example, each of the positioning adjustment assemblies110 may be moved in a left-right direction, as shown in FIG. 1.

It should be noted that each of the positioning adjustment assemblies 110 may be provided with a sensor 111, and each of the adjusted members may be provided with a positioning structure 130, where the positioning structure 130 may be a structure such as a positioning pin hole, which is not limited herein. After the positioning adjustment assembly 110 starts to move from a reference zero point (for example, the left-most position in FIG. 1), the sensor 111 is activated to perform detection of a positioning structure 130. When the positioning structure 130 is detected by the sensor 111, a detection signal of the sensor 111 may form a rising edge signal. Based on a moment when the rising edge signal is generated and a known movement rate of the positioning adjustment assembly 110, a movement distance of the positioning adjustment assembly 110 can be calculated, and the movement distance is combined with respect to the reference zero point of the positioning adjustment assembly 110 to determine starting position information of an adjusted member including the positioning structure 130.

It should be noted that the calculation of the movement distance can be performed by recording the amount of rotation of a motor with an encoder, thereby calculating positions of both ends of the detected adjusted member, for example, by outputting pulses with the encoder, and then counting of the pulses by a Programmable Logic Controller (PLC), thereby converting the pulses into position data. For another example, the movement distance can be determined by calculating the movement rate versus time.

It should be noted that there may be a plurality of adjusted members, for example, including a negative electrode probe assembly 121, a positive electrode probe assembly 122, and a negative pressure assembly 123, and the number and type of the assemblies may be adjusted according to a specific type and a test requirement of a target battery 140, which is not limited herein. Each of the adjusted members is further provided with a plurality of operation members 131. For example, the negative electrode probe assembly 121 and the positive electrode probe assembly 122 both are provided with a battery probe. For another example, the negative pressure assembly 123 is provided with a negative pressure suction nozzle. A specific type of the operation member 131 can be adjusted according to a specific type of the adjusted member. It should be noted that, before the adjusted member is operated by the operation member 131, the position of the operation member 131 in the adjusted member and the position of the operation point of the battery 140 to be operated should be located on the same axis to ensure that the operation member 131 can be aligned with the position of the operation point in the target battery 140 after being translated by a distance. The operation point of the target battery 140 may be a battery post 141, or may be a housing area between the battery post 141 and a centerline of the battery, or may be a liquid injection port on the housing that interfaces with the negative pressure suction nozzle. The specific operation point may be adjusted according to the type of the adjusted member.

It should be noted that the target battery 140 is positioned above the positioning tool 100, and the adjusted member is positioned below the target battery. By disposing a lifting assembly 150 that can lift the positioning adjustment assembly to be in contact with the target battery, so that the target battery can be translated or lowered to be separated from the adjusted member by the positioning adjustment assembly 110.

A control method according to some embodiments of the present application will be further described with reference to the positioning tool shown in FIG. 1 as an implementation environment.

Referring to FIG. 2, an embodiment of the present application provides a positioning adjustment method, including, but not limited to:
step S210 of determining start position information of an adjusted member;
step S220 of determining target position information to determine a target movement distance based on the target position information and the start position information of the adjusted member, where the target position information is determined based on preset installation information of a target battery; and
step S230 of moving the adjusted member to a target position based on the target movement distance.

It should be noted that the implementation environment shown in FIG. 1 is taken as an example. After the positioning tool is powered on to receive a start signal, a reset operation is first performed on the positioning adjustment assembly, and a reference zero point may be set in advance as a reference for recording the start position information of the adjusted member. At resetting of the positioning adjustment assembly, the positioning adjustment assembly is moved to the reference zero point for standby. An example in which the left-most end of the positioning tool is used as the reference zero point of the positioning adjustment assembly is taken as an example for illustrative description. During a practical application, a person skilled in the art is motivated to set specific coordinates of the reference zero point according to actual requirements, which is not limited more in the present embodiment.

It should be noted that, after the positioning tool is activated, the positioning adjustment assembly starts to translate. For example, each of the positioning adjustment assemblies can be moved from left to right as shown in FIG. 1, and searches for the adjusted member during the movement of the positioning adjustment assemblies. For example, the positioning structure can be detected by a sensor, or can be detected by image recognition. A specific manner detecting the adjusted member by the positioning adjustment assembly is not limited in the present embodiment. When the adjusted member is detected by the positioning adjustment assembly, since the moving speed and the moving time of the positioning adjustment assembly are both known and the positioning adjustment assembly is usually moved along a straight line in the positioning tool of the formation and capacity grading device, the moving distance of the positioning adjustment assembly can be calculated, and the position of the adjusted member relative to the reference zero point can be calculated in combination with the moving distance, that is, the starting position information of the adjusted member can be obtained.

It should be noted that there may be a plurality of adjusted members, for example, a positive electrode probe assembly, a negative electrode probe assembly, and a negative pressure assembly. The specific types and the number of the adjusted members are not limited in the present embodiment. In the present embodiment, the positioning adjustment assembly detects one of the adjusted members, and after the one of the adjusted members is moved to the target position, the next one of the adjusted members is detected and moved. For ease of description, the technical solution of the present embodiment is explained in terms of the operation of one of the adjusted members without special description.

It should be noted that the positioning adjustment assembly needs to move the adjusted member to the target position corresponding to the operation point of the target battery. For example, a target position corresponding to the positive electrode probe assembly is right above the positive post of the target battery, a target position corresponding to the negative electrode probe assembly is right above the negative post of the target battery, and a target position corresponding to the negative pressure suction nozzle is right above a liquid injection port of the target battery. Therefore, to ensure the movement accuracy of the adjusted member, it is necessary to first determine the target position information of the target position, and then determine the target movement distance that the adjusted member needs to move in combination with the start position information of the adjusted member obtained in the above description. Based on this, since the installation position of the target battery in the positioning tool is fixed and known and arrangement positions of the plurality of target batteries are also disposed regularly (for example, the plurality of target batteries are arranged neatly in one direction as shown in FIG. 1), preset installation information of the target battery, such as an installation position of the battery, a post position of the battery, and the like, can be input to an upper system of the positioning tool. A relative position between the target battery and the adjusted member can be determined by the preset installation information, thereby determining the target movement distance. For example, the preset installation information may be a horizontal distance of the target battery and the battery post relative to the reference zero point, and a specific target position may be determined according to the type of the adjusted member. Then, a relative distance between the target position and a start point of the component may be determined according to the start position information of the adjusted member and the preset installation information. The relative distance is used as the target movement distance, so that the target position can be aligned with the adjusted member after the adjusted member is moved by the target movement distance, thereby achieving a subsequent operation. Of course, the preset installation information may also be other types of information, and the relative distance between the target position and the adjusted member can be calculated by using the known battery position.

It should be noted that, after the target movement distance is determined, the positioning adjustment assembly can drive the adjusted member to move so as to align the target position. For example, an operation duration of the positioning adjustment assembly may be calculated according to the target movement distance and the moving speed of the positioning adjustment assembly. When the target movement distance is determined, the accurate movement of the positioning adjustment assembly may be realized. Movement of the adjustment member to the target position may be also determined by other related art. A specific manner of determining the target movement distance is not limited herein.

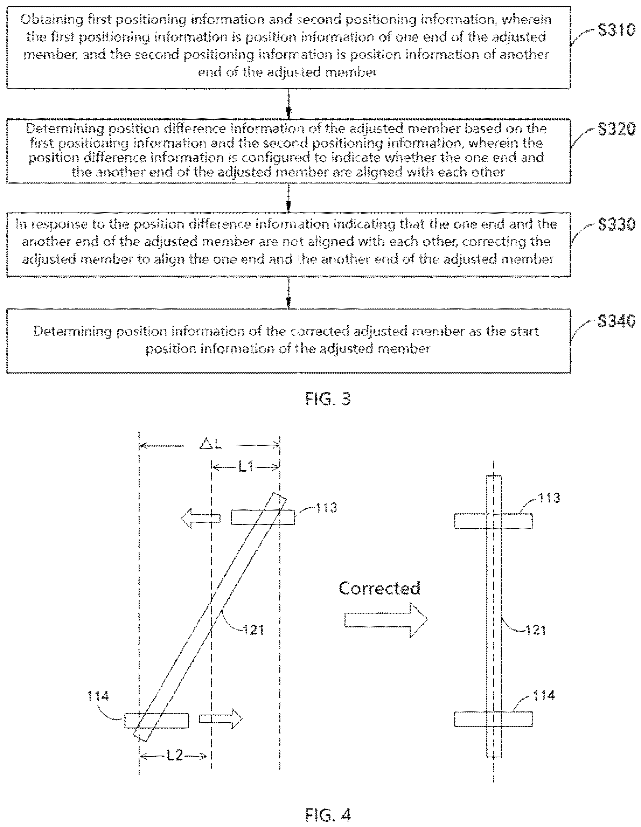

In addition, in one embodiment, referring to FIG. 3, the step S210 shown in FIG. 2 further includes, but not limited to:
step S310 of obtaining first positioning information and second positioning information, where the first positioning information is position information of one end of the adjusted member, and the second positioning information is position information of another end of the adjusted member;
step S320 of determining position difference information of the adjusted member according to the first positioning information and the second positioning information, where the position difference information is configured to indicate whether the one end and the another end of the adjusted member are aligned with each other;
step S330 of correcting the adjusted member in response to the position difference information indicating that the one end and the another end of the adjusted member are not aligned with each other to align the one end and the another end of the adjusted member; and
step S340 of determining position information of the corrected adjusted member as the start position information of the adjusted member.

It should be noted that the implementation environment shown in FIG. 1 is still taken as an example. The positioning adjustment assemblies includes a first positioning adjustment assembly and a second positioning adjustment assembly. Each of the positioning adjustment assemblies is correspondingly provided with a driving assembly. The driving assemblies include a first driving assembly and a second driving assembly. The first driving assembly and the second driving assembly are respectively mounted on opposite sides of the positioning tool, the first positioning adjustment assembly and the second positioning adjustment assembly are respectively provided with a sensor, and both ends of the adjusted member are provided with a positioning structure. The sensors may be a laser sensor, a color mark sensor, or an optical fiber sensor, and the positioning structure may be provided correspondingly according to the type of the sensor. For example, a positioning hole is provided for the laser sensor, which is not limited herein.

It should be noted that, since a plurality of target batteries generally need to be operated in batch by the adjusted member(s), the size of the adjusted member(s) is generally longer. To avoid the occurrence of alignment jamming between the adjusted member(s) and the positioning adjustment assemblies due to deflection of an initial state of the adjusted member(s), the positioning adjustment assemblies are individually driven by the first driving assembly and the second driving assembly respectively provided at both ends of the positioning tool. In the case where the adjusted member is provided with a connection shaft, the first positioning adjustment assembly and the second positioning adjustment assembly can be respectively butted with respective ends of the adjusted member, so that the adjusted member can be moved alone with the two ends, thereby effectively improving the operability and accuracy of the movement of the adjusted member. The occurrence of alignment jamming between the adjusted member(s) and the positioning adjustment assemblies due to the deflection of the initial state of the adjusted member(s) can be avoided in a manner of individually driving the two ends instead of linkage of the two ends.

It should be noted that, on the basis that the first positioning adjustment assembly and the second positioning adjustment assembly are provided with sensors, and the two ends of the adjusted member are provided with a positioning structure, the laser sensors can be taken as an example of the sensors. The positioning information can be obtained by detecting a rising edge with the laser sensors. For example, the first positioning adjustment assembly and the second positioning adjustment assembly start movement from the reference zero point at the same time, and the first positioning adjustment assembly starts to record information when it is moved from the reference zero point. When the laser sensor of the first positioning adjustment assembly detects the positioning structure, the first positioning adjustment assembly stops recording information. The recording information may be movement time of the first positioning adjustment assembly, and a first movement distance is determined according to the movement time and the moving speed. The recording information may also be a rotation amount of the first driving assembly driving a screw that is recorded by a counting gear, and the first movement distance is determined according to the rotation amount and a screw distance of the screw. Similarly, a second movement distance of the second positioning adjustment assembly is determined, and the first positioning information and the second positioning information are determined in combination with the reference zero points. It should be noted that the reference zero points of the first positioning adjustment assembly and the second positioning adjustment assembly are flush in a direction perpendicular to the movement direction of the first positioning adjustment assembly and the second positioning adjustment assembly. The first positioning adjustment assembly is positioned closer to the adjusted member than the second positioning adjustment assembly. Since the positioning information of the present embodiment is a relative position calculated from the start point of the assemblies, whether the first driving assembly and the second driving assembly are aligned does not affect the position information. The first positioning information is determined according to an assembly start point and the movement distance of the first positioning adjustment assembly, and the second positioning information is determined according to the assembly start point and the movement distance of the second positioning adjustment assembly. Since the start points of the first positioning adjustment assembly and the second positioning adjustment assembly are set as the reference zero points and the two reference zero points are flush in the direction perpendicular to the movement direction of the positioning adjustment assembly, the first positioning information and the second positioning information are the same regardless of whether the first driving assembly and the second driving assembly are aligned, so that the operation accuracy of the positioning tool can be effectively improved, and the installation accuracy requirement of the relative position between the first driving assembly and the second driving assembly can be reduced.

It should be noted that the adjusted member is slidably disposed on two tracks provided in a first direction, and the two ends of the adjusted member are likely not to be flush in terms of a position in the first direction. In this case, if both the first driving assembly and the second driving assembly drive the first positioning adjustment assembly and the second positioning adjustment assembly respectively to move the adjusted member according to the target movement distance, the operation member (e.g., a probe) of the adjusted member cannot be aligned with the target position (e.g., a battery post) of the target battery, or the adjusted member is stuck on the tracks. Since the first positioning information and the second positioning information are positions relative to the reference zero point, it can be determined that the two ends of the adjusted member are not aligned when there is a position difference between the first positioning information and the second positioning information after the first driving assembly and the second driving assembly are positioned at the two ends of the adjusted member, and when the deflection degree of the adjusted member exceeds a certain range, it is necessary to correct the deflection. The specific deflection degree range in the case of the correction is not limited herein, and can be adjusted according to actual requirements.

A correction method of the present embodiment will be described below in connection with FIG. 4. As shown in FIG. 4, when the two ends of the adjusted member are not aligned in a front direction from left to right, and after the first positioning adjustment assembly 113 and the second positioning adjustment assembly 114 each detect the positioning structure the first positioning adjustment assembly 113 is positioned in front of the second positioning adjustment assembly 114, and a distance difference between the first positioning adjustment assembly 113 and the second positioning adjustment assembly 114 in the movement direction is AL, where one distance between one end of the adjusted member connected to the first positioning adjustment assembly 113 and the centerline of the adjusted member is L1, and another distance between another end of the adjusted member connected to the second positioning adjustment assembly 114 and the centerline of the adjusted member is L2, △L=L1+L2 is satisfied. In this case, the first positioning adjustment assembly 113 can be controlled to move to the left by L1, and the second positioning adjustment assembly 114 can be controlled to move to the right by L2, so that the adjusted member is aligned along the centerline of the adjusted member, thereby achieving alignment of the two ends. Of course, it is also possible to directly control either the first positioning adjustment assembly 113 or the second positioning adjustment assembly 114 to move by AL, so that the two ends can be aligned with each other. In the present embodiment, the first positioning adjustment assembly 113 and the second positioning adjustment assembly 114 are moved simultaneously, so that time for the correction can be reduced, and efficiency of the correction can be improved.

It should be noted that, when the positioning tool is provided with a plurality of adjusted members, the correction may be performed first for each of the adjusted members before the adjusted member is moved to the target position, and then the adjusted member is moved, or the correction may be performed for each of the adjusted members after the adjusted member is moved to the target position, which is not limited in the present embodiment.

In addition, in one embodiment, the preset installation information includes center position information of the target battery, relative position information of the operation member and the positioning structure of the adjusted member, and relative position information of the operation point and the center of the target battery.

It should be noted that the installation position of the target battery is known, that is, the position in which the center of the target battery is located is known, and specification parameters of the target battery are known. Therefore, the preset installation information may be input to the upper system in advance and may include the center position information of the target battery, the relative position information of the operation member and the positioning structure of the adjusted member, and the relative position information of the operation point and the center of the target battery. Based on the above mentioned information of the target battery, the relative position of the operation point of the target battery can be determined, thereby determining the position of the operation member of the adjusted member, and further determining the target movement distance.

In addition, in one embodiment, a reference zero point is provided in the movement direction and on one side of the movement range of the adjusted member.

It should be noted that the setting of the reference zero point in the movement direction on the one side of the movement range of the adjusted member makes it possible for the adjusted member to move on the same side of the reference zero point after determining the target movement distance according to the reference zero point, so as to move the adjusted member to the target position, improve the convenience of control, and simplify the calculation of the target movement distance and improve the data processing efficiency.

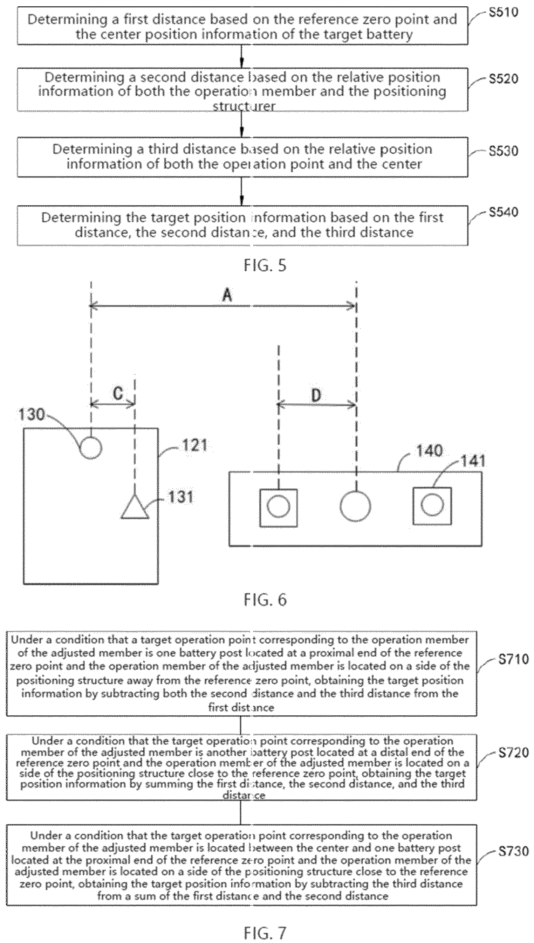

In addition, in one embodiment, referring to FIG. 5, the step S220 in the embodiment shown in FIG. 2 further includes, but not limited to:
step S510 of determining a first distance according to the reference zero point and the center position information of the target battery;
step S520 of determining a second distance according to the relative position information of the operation member and the positioning structure of the adjusted member;
step S530 of determining a third distance according to the relative position information of the operation point and the center of the target battery; and
step S540 of determining the target position information according to the first distance, the second distance, and the third distance.

It should be noted that the implementation environment shown in FIG. 1 is still taken as an example. The adjusted member further includes an operation member, which may be a probe or a negative pressure suction nozzle and can be determined depending on the specific type of the adjusted member.

The first distance, the second distance and the third distance of the present embodiment may be illustrated below with reference to the schematic diagram shown in FIG. 6 by taking an example in which the adjusted member 121 is an adjusted member close to the reference zero point.

A first distance A of the center of the target battery relative to the reference zero point is determined first.

Then, since the relative position between the operation member 131 and the positioning structure 130 of the adjusted member 121, i.e., of the probe assembly, is fixed, the second distance B is known and fixed.

Then, since battery specifications of the target battery 140 are known and the operation point of the target battery is the battery post 141, the third distance D between the battery pole 141 and the center position of the target battery is known and fixed.

Based on the above description, a distance of the center of the target battery relative to the reference zero point can be characterized by the first distance, a distance of the operation member relative to the positioning structure can be characterized by the second distance, and a distance of the center of the target battery relative to the operation point can be characterized by the third distance. The target position information can be obtained by the operation among the above-described three distances. The specific calculation method can be determined according to the specific type of the adjusted member.

It should be noted that, after the target position information is determined, the target movement distance of the adjusted member can be determined by the target position information and the obtained starting position information of the adjusted member, and the positioning adjustment assembly drives the adjusted member to move the target movement distance from the position where the positioning structure of the adjusted member is located. That is, the operation member of the adjusted member can be aligned with the operation point of the target battery, thereby realizing automatic positioning and automatic moving and model changing of the positioning tool.

In addition, in one embodiment, referring to FIG. 7, the step S220 in the embodiment shown in FIG. 2 further includes, but not limited to:
step S710 of, under a condition that the target operation point corresponding to the operation member of the adjusted member is one battery post located at a proximal end of the reference zero point and the operation member of the adjusted member is located on a side of the positioning structure away from the reference zero point, obtaining the target position information by subtracting both the second distance and the third distance from the first distance;
step S720 of, under a condition that the target operation point corresponding to the operation member of the adjusted member is another battery post located at a distal end of the reference zero point and the operation member of the adjusted member is located on a side of the positioning structure close to the reference zero point, obtaining the target position information by summing the first distance, the second distance, and the third distance; and
step S730 of, under a condition that the target operation point corresponding to the operation member of the adjusted member is located between the battery center and one battery post located at the proximal end of the reference zero point and the operation member of the adjusted member is located on a side of the positioning structure close to the reference zero point, obtaining the target position information by subtracting the third distance from a sum of the first distance and the second distance.

It should be noted that, since target positions corresponding to different adjusted members are different, it is necessary to calculate a target movement distance for each of the adjusted members with respect to the zero point once.

It should be noted that the adjusted members may include a positive electrode probe assembly and a negative electrode probe assembly. In order to accommodate the battery electrode, the positions of the probe assemblies are generally replaced. For example, as shown in FIG. 1, the operation member 131 of the negative electrode probe assembly 121 is located on the right side of the positioning structure 130, and the operation member 131 of the positive electrode probe assembly 123 is located on the left side of the positioning structure 130. Therefore, in the case where the first distance, the second distance, and the third distance are determined, it is necessary to determine the target movement distance for each of the different adjusted members with respect to the zero point in a different calculation manner.

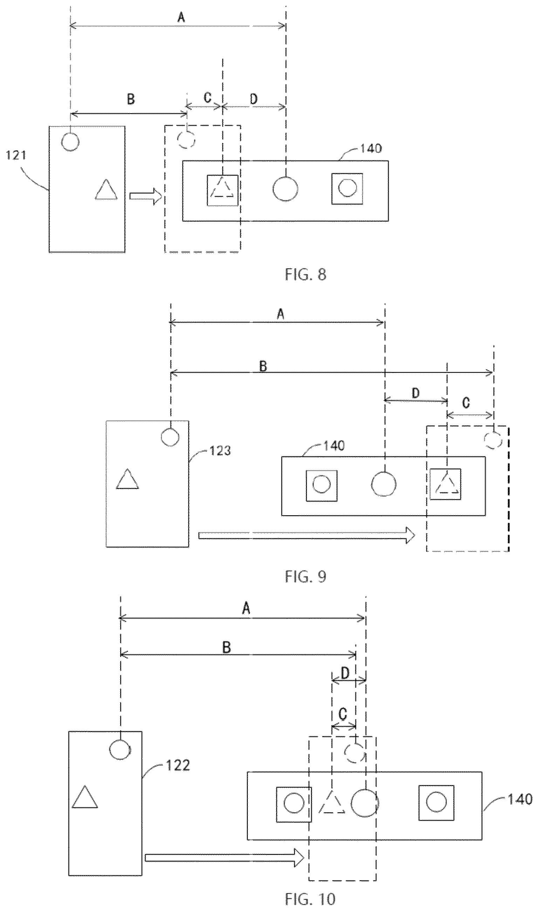

A calculation manner of the target position information of each of the different adjusted members with respect to the reference zero point is illustrated below in combination with FIGS. 8-10. In following three specific examples, the positioning adjustment assembly and the adjusted member are located on the left side of the target battery in a positive direction from left to right, the battery post located at the proximal end of the reference zero point is a negative electrode post, the battery post located at the distal end of the reference zero point is a positive electrode post, the first distance is A, the second distance is C, and the third distance is D. For specific definitions for the first distance, the second distance, and the third distance, reference may be made to the description of the embodiment shown in FIG. 5. To facilitate description of the target position, that is, a position of the positioning structure of the adjusted member relative to the reference zero point, the position is indicated by B, which is not repeatedly described herein.

Referring to FIG. 8, which shows a schematic diagram of movement of the negative electrode probe assembly 121. The target position B is a position in which the negative electrode probe needs to be moved right above a negative electrode post of the target battery. When the negative electrode probe is adjusted in position, since the negative electrode probe of the negative electrode probe assembly 121 is located on the right side of the positioning structure, the positioning structure does not exceed the battery center of the target battery 140, and a distance between the positioning structure and the battery center of the target battery 140 is a sum of the second distance C and the third distance D. Therefore, a distance by which the positioning structure needs to be moved can be calculated, that is, the target position of the positioning structure relative to the reference zero point refers to B=A-D-C.

Referring to FIG. 9, which shows a schematic diagram of movement of the positive electrode probe assembly 123. The target position B is a position in which the positive electrode probe needs to be moved to a positive electrode post of the target battery. Since the positive electrode probe of the positive electrode probe assembly 123 is located on the left side of the positioning structure, when the positive electrode probe is adjusted in position, the positioning structure is located at the right side of the battery centerline of the target battery 140, and a distance between the positioning structure and the battery center of the target battery 140 is a sum of the second distance C and the third distance D. Therefore, a distance by which the positioning structure needs to be moved can be calculated, that is, the target position of the positioning structure relative to the reference zero point refers to B=A+D+C.

Referring to FIG. 10, which shows a schematic diagram of movement of the negative pressure assembly 122. The target movement distance B is a distance of movement of the negative pressure suction nozzle from a current position of the negative pressure suction nozzle to a position between the battery center and the negative electrode post. Since the negative pressure suction nozzle of the negative pressure assembly 122 is located on the left side of the positioning structure, when the positive electrode probe is aligned with the positive electrode post, the positioning structure is located between the battery centerline and the negative electrode post of the target battery 140, and the distance between the positioning structure and the battery center of the target battery 140 is a difference between the third distance D and the second distance C. Therefore, the distance by which the positioning structure needs to be moved can be calculated, that is, the target position of the positioning structure relative to the reference zero point refers to B=A-D+C.

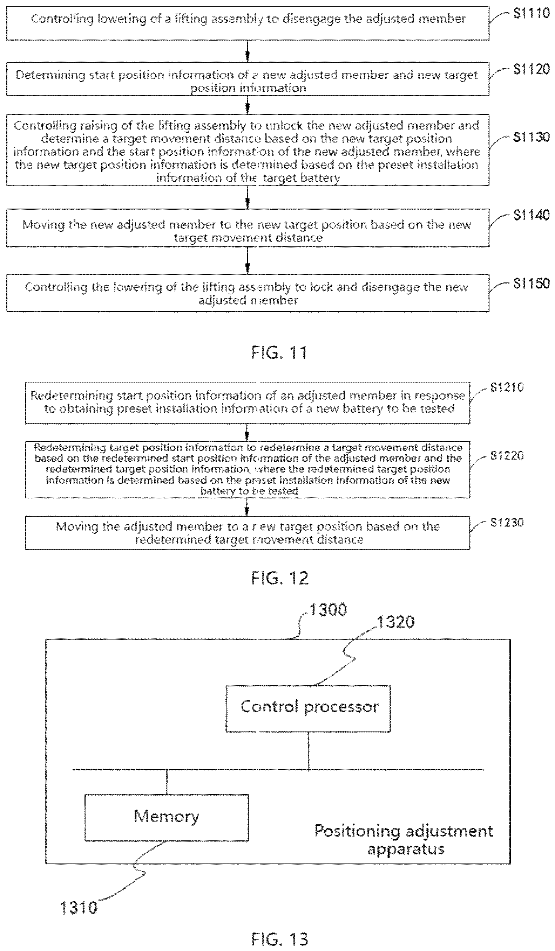

**In** addition, in one embodiment, referring to FIG. 11, where there are a plurality of adjusted members, the method further includes, but not limited to: after the step S230 shown in FIG. 2,
step S1110 of controlling lowering of a lifting assembly to disengage the adjusted member;
step S1120 of determining start position information of a new adjusted member and new target position information;
step S1130 of controlling raising of the lifting assembly to unlock the new adjusted member and determine a target movement distance based on the new target position information and the start position information of the new adjusted member, where the new target position information is determined based on the preset installation information of the target battery;
step S1140 of moving the new adjusted member to the new target position based on the new target movement distance; and
step S1150 of controlling the lowering of the lifting assembly to lock and disengage the new adjusted member.

It should be noted that, in order to improve the stability of the adjusted member, the adjusted member is located above the positioning tool, and the positioning tool can be provided with a lifting assembly to control engagement and disengagement between the positioning adjustment assembly and the adjusted member, so that the adjusted member may be moved, i.e., unlocked when the lifting assembly is raised, and then locked after the lifting assembly is lowered. For example, both ends of the adjusted member can be provided with a toothed block and a toothed rack, respectively, and the toothed block is connected to a component such as a guide rod and a spring, so that the toothed rack is disengaged from the toothed block when the lifting assembly is raised, thereby realizing unlocking of the adjusted member and the track to enable the positioning adjustment assembly to drive the adjusted member to move, and the toothed block is engaged with the toothed rack when the lifting assembly is lowered to realize locking of the adjusted member and the track. Of course, other types of locking structures may be further used as long as it is possible to realize that the adjusted member can be unlocked and movable after the lifting assembly is lifted and can be locked and non-movable after the lifting assembly is lowered.

It should be noted that the principle of locking the adjustable member after lowering of the lifting assembly is described with reference to the above-mentioned embodiments, which is not repeatedly described herein. When the lifting assembly is lowered to enable the positioning adjustment assembly to be disengaged from the adjusted member, the next adjusted member can be moved. For example, after the movement of the negative pressure assembly is completed, the movement of the positive electrode probe assembly and the movement of the negative electrode probe assembly are continued, and the sequence is adjusted according to actual requirements.

It should be noted that, after the movement of the one adjusted member is completed, since the position at which the positioning adjustment assembly starts to move is the target position of the previous adjusted member and the position information thereof is also known, the positioning adjustment assembly can be moved to the next adjusted member according to a preset direction by using the target position as a new reference point. After the sensor detects the positioning structure, the start position of the next adjusted member can be determined, or the positioning adjustment assembly can be controlled to return to the reference zero point and then can perform the steps described in the above embodiment once again, so long as it can be ensured that the target position can be determined in the same manner based on various distance information, and the target movement distance can be finally determined. For example, the target position of the previous movement is the reference point, and the positioning adjustment assembly can be moved to the next adjusted member according to the preset direction. After the sensor detects the positioning structure, the target position of the previous adjusted member is the reference point, and start position information of the new adjusted member relative to the reference zero point can be determined according to the above reference point in combination with the detected distance by which the previous adjusted member is moved by using the target position of the previous adjusted member as the reference point. For another example, the positioning adjustment module is controlled to return to the reference zero point, and then performs steps S1120 to S1150. For the principles of steps S1120 to S1150, reference may be made to the description of the embodiment shown in FIG. 2, and the same operation may be performed once again according to the new information, which is not repeatedly described herein.

In addition, in one embodiment, referring to FIG. 12, the method further includes, but not limited to: after the step S230 shown in FIG. 2,
step S1210 of redetermining start position information of an adjusted member in response to obtaining preset installation information of a new target battery;
step S1220 of redetermining target position information to redetermine a target movement distance based on the redetermined start position information of the adjusted member and the redetermined target position information, where the redetermined target position information is determined based on the preset installation information of the new target battery; and
step S1230 of moving the adjusted member to a new target position based on the redetermined target movement distance.

It should be noted that, after the movement of the negative pressure assembly, the positive electrode probe assembly, and the negative electrode probe assembly is completed according to the above-described embodiments, the positioning adjustment assembly and the lifting assembly can be reset again, and be returned to or not returned to the reference zero point for standby. After the operation of the target battery in the positioning tool is completed, a new batch of target batteries need to be replaced for operation. In this case, if the preset installation information of the target batteries is unchanged, that is, the type of each of the target batteries is the same, the positioning tool can keep parameters recorded in the previous operation to perform the repeated operation directly without redetermination of various parameters (such as the target movement distance), so that the working efficiency of the positioning tool can be effectively improved.

It should be noted that, if the preset installation information of the target battery is changed, it can be determined that the type of the target battery is changed, and both the installation position and the battery specification of the new target battery may be changed. The positioning tool may redetermine various parameters according to the preset installation information of the new target battery, for example, redetermine the target position information, the first distance, the second distance, the third distance, and the target movement distance, that is, re-execute the technical solution of the present embodiment. After the battery type is changed, automatic positioning and self-determined movement can be completed only by inputting the new preset installation information into the positioning tool without adjusting the adjusted member, thereby effectively improving the working efficiency of the positioning tool.

As shown in FIG. 13, which is a schematic structural diagram of a positioning adjustment apparatus according to some embodiments of the present application. The present application further provides a positioning adjustment apparatus 1300, including at least one control processor 1320 and a memory 1310 for communicating with the at least one control processor 1320; where the memory 1310 stores instructions executable by the at least one control processor 1320 that are executed by the at least one control processor 1320 to enable the at least one control processor 1320 to perform the positioning adjustment method described above.

The memory 1310, as a non-transitory computer-readable storage medium, may be configured to store non-transitory software programs and non-transitory computer-executable programs, such as the positioning adjustment method of any of the above embodiments of the present application. The control processor 1320 implements the positioning adjustment method in any of the above-described embodiments of the present application by running the non-transitory software program and the instructions stored in the memory 1310.

The memory 1310 may include a storage program area and a storage data area, where the storage program area may store an operation system and an application program required by at least one function; and the storage data area may store data or the like required for performing the positioning adjustment method in any of the above-described embodiments. In addition, the memory 1310 may include a high speed random access memory, and may also include a non-transitory memory, such as at least one magnetic disk storage device, a flash memory device, or other non-transitory solid state storage device. It should be noted that the memory 1310 alternatively includes a remote memory disposed corresponding to the control processor 1320. The remote memory can be connected to the mobile terminal via a network. Examples of the network include but are not limited to an internet, an intranet, a local area network, a mobile communication network and the combinations of them.

The non-transitory software program and the instructions required to implement the positioning adjustment method in any of the above-described embodiments are stored in the memory, and when executed by one or more processors, perform the positioning adjustment method in any of the above-described embodiments, for example, perform the method steps S210 to S230 in FIG. 2, the method steps S310 to S340 in FIG. 3, the method steps S510 to S540 in FIG. 5, the method steps S710 to S730 in FIG. 7, the method steps S1110 to S1120 in FIG. 11, the method steps S1210 to S1260 in FIG. 12, the method steps S1310 to S1340 in FIG. 13, and the method steps S1410 to S1460 in FIG. 14.

Another embodiment of the present application further provides a formation and capacity grading device, including the positioning adjustment device in any of the above-described embodiments.

The present application also provides a computer-readable storage medium storing computer-executable instructions for causing a computer to perform the positioning adjustment method in any of the above-described embodiments, for example, perform the method steps S210 to S230 in FIG. 2, the method steps S310 to S340 in FIG. 3, the method steps S510 to S540 in FIG. 5, the method steps S710 to S730 in FIG. 7, the method steps S1110 to S1120 in FIG. 11, the method steps S1210 to S1260 in FIG. 12, the method steps S1310 to S1340 in FIG. 13, and the method steps S1410 to S1460 in FIG. 14.

The device embodiments described above are merely illustrative, where the units described as separate components could or could not be physically separate, which may be located in one place, or may be distributed to multiple network elements. A part or a whole of the modules could be selected according to the actual needs to achieve the objective of the present embodiment.

It should be understood by those of ordinary skill in the art that all or some of the steps of the methods disclosed above or systems may be implemented as a software, a firmware, a hardware, and suitable combinations thereof. Some or all of the physical components may be implemented as a software executed by a processor, such as a central processing unit, a digital signal processor, or a microprocessor, or as a hardware, or as an integrated circuit, such as an application specific integrated circuit. Such a software may be distributed on a computer-readable media, which may include a computer storage media (or a non-transitory media) and a communication media (or a transitory media). As is well known to those of ordinary skill in the art, the term computer storage medium includes volatile and non-volatile, removable and non-removable media embodied in any method or technique for storing information, such as computer readable instructions, data structures, program modules, or other data. The computer storage media includes, but not limited to, Random Access Memory (RAM), Random Only Memory (ROM), Electrically Erasable Programmable Read-Only Memory (EEPROM), flash memory or other memory technology, Compact Disc Read-Only Memory (CD-ROM), digital versatile disks (DVD) or other optical disk storage, magnetic cassettes, magnetic tape, magnetic disk storage or other magnetic storage devices, or any other medium that can be used to store the desired information and that can be accessed by a computer. Furthermore, it is well known to those of ordinary skill in the art that the communication medium generally includes computer readable instructions, data structures, program modules, or other data in a modulated data signal such as a carrier wave or other transmission mechanism, and may include any information delivery medium.

## Claims

1. A positioning adjustment method, comprising:
determining start position information of an adjusted member (121);
determining target position information to determine a target movement distance (B) based on the target position information and the start position information of the adjusted member (121), wherein the target position information is determined based on preset installation information of a target battery (140); and
moving the adjusted member (121) to a target position based on the target movement distance (B);
**characterized in that** the determining of the start position information of the adjusted member (121) comprises:
obtaining first positioning information and second positioning information, wherein the first positioning information is position information of one end of the adjusted member (121), and the second positioning information is position information of another end of the adjusted member (121);
determining position difference information of the adjusted member (121) based on the first positioning information and the second positioning information, wherein the position difference information is configured to indicate whether the one end and the another end of the adjusted member (121) are aligned with each other;
in response to the position difference information indicating that the one end and the another end of the adjusted member (121) are not aligned with each other, correcting the adjusted member (121) to align the one end and the another end of the adjusted member (121); and
determining position information of the corrected adjusted member (121) as the start position information of the adjusted member (121).

2. The positioning adjustment method of claim 1, wherein the preset installation information comprises center position information of the target battery (140), relative position information of both an operation member (131) of the adjusted member (121) and a positioning structure (130) of the adjusted member (121), and relative position information of both an operation point of the target battery (140) and a center of the target battery (140).

3. The positioning adjustment method of claim 2, wherein a reference zero point is provided in a movement direction of the adjusted member (121) and on one side of a movement range of the adjusted member (121).

4. The positioning adjustment method of claim 3, wherein the determining of the target position information comprises:
determining a first distance (A) based on the reference zero point and the center position information of the target battery (140);
determining a second distance (C) based on the relative position information of both the operation member (131) and the positioning structure (130);
determining a third distance (D) based on the relative position information of both the operation point and the center; and
determining the target position information based on the first distance (A), the second distance (C), and the third distance (D).

5. The positioning adjustment method of claim 4, wherein the determining of the target position information comprises:
under a condition that a target operation point corresponding to the operation member (131) of the adjusted member (121) is one battery post (141) located at a proximal end of the reference zero point and the operation member (131) of the adjusted member (121) is located on a side of the positioning structure (130) away from the reference zero point, obtaining the target position information by subtracting both the second distance (C) and the third distance (D) from the first distance (A); or
under a condition that the target operation point corresponding to the operation member (131) of the adjusted member (121) is another battery post (141) located at a distal end of the reference zero point and the operation member (131) of the adjusted member (121) is located on a side of the positioning structure (130) close to the reference zero point, obtaining the target position information by summing the first distance (A), the second distance (C), and the third distance (D); or
under a condition that the target operation point corresponding to the operation member (131) of the adjusted member (121) is located between the center and one battery post (141) located at the proximal end of the reference zero point and the operation member (131) of the adjusted member (121) is located on a side of the positioning structure (130) close to the reference zero point, obtaining the target position information by subtracting the third distance (D) from a sum of the first distance (A) and the second distance (C).

6. A positioning tool, configured for adjusting an adjusted member (121) to adapt the adjusted member (121) to a battery position, wherein the positioning tool comprises one or more positioning adjustment assemblies (110) and a controller for:
controlling the positioning adjustment assemblies (110) to move from a reference zero point to determine start position information of the adjusted member (121) under a condition that the positioning adjustment assemblies (110) detect the adjusted member (121);
determining target position information to determine a target movement distance (B) based on the target position information and the start position information of the adjusted member (121), wherein the target position information is determined based on preset installation information of a target battery (140); and
controlling the positioning adjustment assemblies (110) to move the adjusted member (121) to a target position based on the target movement distance (B);
**characterized in that** the positioning adjustment assemblies (110) comprise a first positioning adjustment assembly (113) and a second positioning adjustment assembly (114), the first positioning adjustment assembly (113) and the second positioning adjustment assembly (114) are correspondingly provided with driving assemblies, the driving assemblies comprise a first driving assembly and a second driving assembly, the first driving assembly and the second driving assembly are respectively mounted on opposite sides of the positioning tool and provided with a sensor (111), and both ends of the adjusted member (121) are provided with a positioning structure (130), and the controller is further configured for:
obtaining first positioning information and second positioning information, wherein the first positioning information is position information of one end of the adjusted member (121) obtained in response to the sensor (111) of the first positioning adjustment assembly (113) detecting the positioning structure (130), and the second positioning information is position information of another end of the adjusted member (121) obtained in response to the sensor (111) of the second positioning adjustment assembly (114) detecting the positioning structure (130);
determining position difference information based on the first positioning information and the second positioning information, wherein the position difference information is configured to indicate whether the one end and the another end of the adjusted member (121) are aligned with each other;
in response to the position difference information indicating that the one end and the another end of the adjusted member (121) are not aligned with each other, controlling the first driving assembly and the second driving assembly to drive respective positioning adjustment assemblies (110) to move alone with the one end and the another end of the adjusted member (121) for correction to align the one end and the another end of the adjusted member (121); and
determining position information of the corrected positioning structure (130) as the start position information of the adjusted member (121).

7. The positioning tooling of claim 6, wherein the preset installation information comprises center position information of the target battery (140), relative position information of both an operation member (131) of the adjusted member (121) and the positioning structure (130) of the adjusted member (121), and relative position information of both an operation point of the target battery (140) and a center of the target battery (140), a reference zero point is provided in a movement direction of the adjusted member (121) and on one side of a movement range of the adjusted member (121), and the controller is further configured for:
determining a first distance (A) based on the reference zero point and the center position information of the target battery (140);
determining a second distance (C) based on the relative position information of both the operation member (131) and the positioning structure (130);
determining a third distance (D) based on the relative position information of both the operation point and the center; and
determining the target position information based on the first distance (A), the second distance (C), and the third distance (D).

8. The positioning tool of claim 7, wherein the controller is further configured for:
under a condition that a target operation point corresponding to the operation member (131) of the adjusted member (121) is one battery post (141) located at a proximal end of the reference zero point and the operation member (131) of the adjusted member (121) is located on a side of the positioning structure (130) away from the reference zero point, obtaining the target position information by subtracting both the second distance (C) and the third distance (D) from the first distance (A); or
under a condition that the target operation point corresponding to the operation member (131) of the adjusted member (121) is another battery post (141) located at a distal end of the reference zero point and the operation member (131) of the adjusted member (121) is located on a side of the positioning structure (130) close to the reference zero point, obtaining the target position information by summing the first distance (A), the second distance (C), and the third distance (D); or
under a condition that the target operation point corresponding to the operation member (131) of the adjusted member (121) is located between the battery center and one battery post (141) located at the proximal end of the reference zero point and the operation member (131) of the adjusted member (121) is located on a side of the positioning structure (130) close to the reference zero point, obtaining the target position information by subtracting the third distance (D) from a sum of the first distance (A) and the second distance (C).

9. The positioning tooling of claim 7, wherein, after the adjusted member (121) is moved to the target position, the controller is further configured for:
determining start position information of a new adjusted member (121) under a condition that the positioning adjustment assemblies (110) detect the new adjusted member (121);
determining new target position information to determine a new target movement distance (B) based on the new target position information and the start position information of the new adjusted member (121), wherein the new target position information is determined based on the preset installation information of the target battery (140); and
controlling the positioning adjustment assemblies (110) to move the new adjusted member (121) to a new target position based on the new target movement distance (B).

10. The positioning tooling of claim 7, wherein, after the adjusted member (121) is moved to the target position by the positioning adjustment assemblies (110), the controller is further configured for:
controlling the positioning adjustment assemblies (110) to be moved to the reference zero point;
in response to obtaining preset installation information of a new target battery (140), controlling the positioning adjustment assemblies (110) to redetermine start position information of the adjusted member (121);
redetermining target position information to redetermine a target movement distance (B) based on the redetermined start position information of the adjusted member (121) and the redetermined target position information, wherein the redetermined target position information is determined based on the preset installation information of the new target battery (140); and
controlling the positioning adjustment assemblies (110) to move the adjusted member (121) to a new target position based on the redetermined target movement distance (B).

11. A positioning adjustment apparatus, comprising at least one control processor (1320) and a memory (1310) for communicating with the at least one control processor (1320); **characterized in that** the memory (1310) stores thereon instructions executable by the at least one control processor (1320) that are executed by the at least one control processor (1320) to enable the at least one control processor (1320) to perform the positioning adjustment method of any of claims 1-5.

12. A formation and capacity grading device, comprising the positioning adjustment device of claim 11, or the positioning tool of any of claims 6-10.

13. A computer readable storage medium, **characterized in that** the computer readable storage medium stores thereon computer-executable instructions for enabling a computer to perform the positioning adjustment method of any one of claims 1 to 5.

## Patentansprüche

1. Ein Verfahren zur Einstellung der Positionierung, das Folgendes umfasst:
Bestimmen der Startpositionsinformation eines eingestellten Elements (121);
Bestimmen von Zielpositionsinformationen, um eine Zielbewegungsdistanz (B) basierend auf den Zielpositionsinformationen und den Startpositionsinformationen des eingestellten Elements (121) zu bestimmen, wobei die Zielpositionsinformationen basierend auf voreingestellten Installationsinformationen einer Zielbatterie (140) bestimmt werden; und
Bewegen des eingestellten Elements (121) zu einer Zielposition basierend auf der Zielbewegungsdistanz (B);
**dadurch gekennzeichnet, dass** das Bestimmen der Startpositionsinformation des eingestellten Elements (121) umfasst:
Erhalten einer ersten Positionierungsinformation und einer zweiten Positionierungsinformation, wobei die erste Positionierungsinformation eine Positionsinformation eines Endes des eingestellten Elements (121) ist, und die zweite Positionierungsinformation eine Positionsinformation des anderen Endes des eingestellten Elements (121) ist;
Bestimmen von Positionsdifferenzinformationen des eingestellten Elements (121) auf der Grundlage der ersten Positionierungsinformationen und der zweiten Positionierungsinformationen, wobei die Positionsdifferenzinformationen so konfiguriert sind, dass sie anzeigen, ob das eine Ende und das andere Ende des eingestellten Elements (121) zueinander ausgerichtet sind;
als Reaktion darauf, dass die Positionsdifferenzinformation anzeigt, dass das eine Ende und das andere Ende des eingestellten Elements (121) nicht zueinander ausgerichtet sind, Korrigieren des eingestellten Elements (121), um das eine Ende und das andere Ende des eingestellten Elements (121) auszurichten; und
Bestimmen von Positionsinformationen des korrigierten eingestellten Elements (121) als die Startpositionsinformationen des eingestellten Elements (121).

2. Verfahren zur Einstellung der Positionierung nach Anspruch 1, wobei die voreingestellten Installationsinformationen eine Mittenpositionsinformation der Zielbatterie (140), eine Relativpositionsinformation sowohl eines Betätigungselements (131) des eingestellten Elements (121) als auch einer Positionierungsstruktur (130) des eingestellten Elements (121) und eine Relativpositionsinformation sowohl eines Betriebspunkts der Zielbatterie (140) als auch einer Mitte der Zielbatterie (140) umfassen.

3. Verfahren zur Einstellung der Positionierung nach Anspruch 2, wobei ein Referenznullpunkt in einer Bewegungsrichtung des eingestellten Elements (121) und auf einer Seite eines Bewegungsbereichs des eingestellten Elements (121) vorgesehen ist.

4. Verfahren zur Einstellung der Positionierung nach Anspruch 3, wobei das Bestimmen der Zielpositionsinformation umfasst:
Bestimmen eines ersten Abstands (A) auf der Grundlage des Referenznullpunkts und der Mittenpositionsinformation der Zielbatterie (140);
Bestimmen eines zweiten Abstands (C) auf der Grundlage der relativen Positionsinformationen sowohl des Betätigungselements (131) als auch der Positionierungsstruktur (130);
Bestimmen eines dritten Abstands (D) auf der Grundlage der relativen Positionsinformationen sowohl des Betriebspunkts als auch des Zentrums der Zielbatterie (140); und
Bestimmen der Zielpositionsinformationen auf der Grundlage des ersten Abstands (A), des zweiten Abstands (C) und des dritten Abstands (D).

5. Verfahren zur Einstellung der Positionierung nach Anspruch 4, wobei das Bestimmen der Zielpositionsinformation umfasst:
unter der Bedingung, dass ein Zielbetriebspunkt, der dem Betätigungselement (131) des eingestellten Elements (121) entspricht, ein Batteriepol (141) ist, der sich an einem proximalen Ende des Referenznullpunkts befindet, und das Betätigungselement (131) des eingestellten Elements (121) sich auf einer Seite der Positionierungsstruktur (130) entfernt von dem Referenznullpunkt befindet, Erhalten der Zielpositionsinformation durch Subtrahieren sowohl des zweiten Abstands (C) als auch des dritten Abstands (D) von dem ersten Abstand (A); oder
unter der Bedingung, dass der Zielbetriebspunkt, der dem Betätigungselement (131) des eingestellten Elements (121) entspricht, ein anderer Batteriepol (141) ist, der sich an einem distalen Ende des Referenznullpunkts befindet, und das Betätigungselement (131) des eingestellten Elements (121) sich auf einer Seite der Positionierungsstruktur (130) nahe dem Referenznullpunkt befindet, Erhalten der Zielpositionsinformation durch Summieren des ersten Abstands (A), des zweiten Abstands (C) und des dritten Abstands (D); oder
unter der Bedingung, dass der Zielbetriebspunkt, der dem Betätigungselement (131) des eingestellten Elements (121) entspricht, zwischen der Mitte der Zielbatterie (140) und einem Batteriepol (141) liegt, der sich am proximalen Ende des Referenznullpunkts befindet, und das Betätigungselement (131) des eingestellten Elements (121) sich auf einer Seite der Positionierungsstruktur (130) nahe dem Referenznullpunkt befindet, Erhalten der Zielpositionsinformation durch Subtrahieren des dritten Abstands (D) von einer Summe des ersten Abstands (A) und des zweiten Abstands (C).

6. Positionierungswerkzeug, das zum Einstellen eines eingestellten Elements (121) konfiguriert ist, um das eingestellte Element (121) an eine Batterieposition anzupassen, wobei das Positionierungswerkzeug eine oder mehrere Positionierungseinstellbaugruppen (110) und eine Steuereinrichtung umfasst, die konfiguriert ist zum:
Steuern der Positionierungseinstellbaugruppen (110), um sich von einem Referenznullpunkt zu bewegen, um Startpositionsinformationen des eingestellten Elements (121) unter einer Bedingung zu bestimmen, dass die Positionierungseinstellbaugruppen (110) das eingestellte Element (121) erfassen;
Bestimmen von Zielpositionsinformationen, um eine Zielbewegungsdistanz (B) basierend auf den Zielpositionsinformationen und den Startpositionsinformationen des eingestellten Elements (121) zu bestimmen, wobei die Zielpositionsinformationen basierend auf voreingestellten Installationsinformationen einer Zielbatterie (140) bestimmt werden; und
Steuern der Positionierungseinstellbaugruppen (110), um das eingestellte Element (121) auf der Grundlage der Zielbewegungsdistanz (B) zu einer Zielposition zu bewegen;
**dadurch gekennzeichnet, dass** die Positionierungseinstellbaugruppen (110) eine erste Positionierungseinstellbaugruppe (113) und eine zweite Positionierungseinstellbaugruppe (114) umfassen, wobei die erste Positionierungseinstellbaugruppe (113) und die zweite Positionierungseinstellbaugruppe (114) jeweils mit Antriebsbaugruppen versehen sind, die Antriebsbaugruppen eine erste Antriebsbaugruppe und eine zweite Antriebsbaugruppe umfassen, die erste Antriebsbaugruppe und die zweite Antriebsbaugruppe jeweils an gegenüberliegenden Seiten des Positionierungswerkzeugs angebracht und mit einem Sensor (111) versehen sind, und beide Enden des eingestellten Elements (121) mit einer Positionierungsstruktur (130) versehen sind, und die Steuereinrichtung ferner konfiguriert ist zum:
Erhalten einer ersten Positionierungsinformation und einer zweiten Positionierungsinformation, wobei die erste Positionierungsinformation eine Positionsinformation eines Endes des eingestellten Elements (121) ist, die als Reaktion auf den Sensor (111) der ersten Positionierungseinstellbaugruppe (113) erhalten wird, der die Positionierungsstruktur (130) erfasst, und die zweite Positionierungsinformation eine Positionsinformation des anderen Endes des eingestellten Elements (121) ist, die als Reaktion auf den Sensor (111) der zweiten Positionierungseinstellbaugruppe (114) erhalten wird, der die Positionierungsstruktur (130) erfasst;
Bestimmen von Positionsdifferenzinformationen auf der Grundlage der ersten Positionierungsinformationen und der zweiten Positionierungsinformationen, wobei die Positionsdifferenzinformationen so konfiguriert sind, dass sie anzeigen, ob das eine Ende und das andere Ende des eingestellten Elements (121) zueinander ausgerichtet sind;
als Reaktion darauf, dass die Positionsdifferenzinformation anzeigt, dass das eine Ende und das andere Ende des eingestellten Elements (121) nicht miteinander ausgerichtet sind, Steuern der ersten Antriebsbaugruppe und der zweiten Antriebsbaugruppe, um die entsprechenden Positionierungseinstellbaugruppen (110) anzutreiben, damit sich nur das eine Ende und das andere Ende des eingestellten Elements (121) zur Korrektur bewegen, um das eine Ende und das andere Ende des eingestellten Elements (121) auszurichten; und
Bestimmen von Positionsinformationen der korrigierten Positionierungsstruktur (130) als die Startpositionsinformationen des eingestellten Elements (121).

7. Positionierungswerkzeug nach Anspruch 6, wobei die voreingestellten Installationsinformationen eine Mittenpositionsinformation der Zielbatterie (140), eine Relativpositionsinformation sowohl eines Betätigungselements (131) des eingestellten Elements (121) als auch der Positionierungsstruktur (130) des eingestellten Elements (121) und eine Relativpositionsinformation sowohl eines Betriebspunkts der Zielbatterie (140) als auch der Mitte der Zielbatterie (140) umfassen, wobei ein Referenznullpunkt in einer Bewegungsrichtung des eingestellten Elements (121) und auf einer Seite eines Bewegungsbereichs des eingestellten Elements (121) vorgesehen ist, und wobei die Steuereinrichtung ferner konfiguriert ist zum:
Bestimmen eines ersten Abstands (A) auf der Grundlage des Referenznullpunkts und der Mittenpositionsinformation der Zielbatterie (140);
Bestimmen eines zweiten Abstands (C) auf der Grundlage der relativen Positionsinformationen sowohl des Betätigungselements (131) als auch der Positionierungsstruktur (130);
Bestimmen eines dritten Abstands (D) auf der Grundlage der relativen Positionsinformationen sowohl des Betriebspunkts als auch der Mitte der Zielbatterie (140); und
Bestimmen der Zielpositionsinformationen auf der Grundlage des ersten Abstands (A), des zweiten Abstands (C) und des dritten Abstands (D).

8. Das Positionierungswerkzeug nach Anspruch 7, wobei die Steuereinrichtung ferner konfiguriert ist zum:
unter der Bedingung, dass ein Zielbetriebspunkt, der dem Betätigungselement (131) des eingestellten Elements (121) entspricht, ein Batteriepol (141) ist, der sich an einem proximalen Ende des Referenznullpunkts befindet, und das Betätigungselement (131) des eingestellten Elements (121) sich auf einer Seite der Positionierungsstruktur (130) entfernt von dem Referenznullpunkt befindet, Erhalten der Zielpositionsinformation durch Subtrahieren sowohl des zweiten Abstands (C) als auch des dritten Abstands (D) von dem ersten Abstand (A); oder
unter der Bedingung, dass der Zielbetriebspunkt, der dem Betätigungselement (131) des eingestellten Elements (121) entspricht, ein anderer Batteriepol (141) ist, der sich an einem distalen Ende des Referenznullpunkts befindet, und das Betätigungselement (131) des eingestellten Elements (121) sich auf einer Seite der Positionierungsstruktur (130) nahe dem Referenznullpunkt befindet, Erhalten der Zielpositionsinformation durch Summieren des ersten Abstands (A), des zweiten Abstands (C) und des dritten Abstands (D); oder
unter der Bedingung, dass der Zielbetriebspunkt, der dem Betätigungselement (131) des eingestellten Elements (121) entspricht, zwischen der Mitte der Zielbatterie (140) und einem Batteriepol (141) liegt, der sich am proximalen Ende des Referenznullpunkts befindet, und das Betätigungselement (131) des eingestellten Elements (121) sich auf einer Seite der Positionierungsstruktur (130) nahe dem Referenznullpunkt befindet, Erhalten der Zielpositionsinformation durch Subtrahieren des dritten Abstands (D) von einer Summe des ersten Abstands (A) und des zweiten Abstands (C).

9. Positionierungswerkzeug nach Anspruch 7, wobei, nachdem das eingestellte Element (121) in die Zielposition bewegt wurde, die Steuereinrichtung ferner konfiguriert ist zum:
Bestimmen von Startpositionsinformationen eines neuen eingestellten Elements (121) unter der Bedingung, dass die Positionierungseinstellbaugruppen (110) das neue eingestellte Element (121) erfassen;
Bestimmen neuer Zielpositionsinformationen, um eine neue Zielbewegungsdistanz (B) basierend auf den neuen Zielpositionsinformationen und den Startpositionsinformationen des neuen eingestellten Elements (121) zu bestimmen, wobei die neuen Zielpositionsinformationen basierend auf den voreingestellten Installationsinformationen der Zielbatterie (140) bestimmt werden; und
Steuern der Positionierungseinstellbaugruppen (110), um das neu eingestellte Element (121) auf der Grundlage der neuen Zielbewegungsdistanz (B) in eine neue Zielposition zu bewegen.

10. Positionierungswerkzeug nach Anspruch 7, wobei, nachdem das eingestellte Element (121) durch die Positionierungseinstellbaugruppen (110) in die Zielposition bewegt wurde, die Steuereinrichtung ferner konfiguriert ist zum:
Steuern der Positionierungseinstellbaugruppen (110), um sie zum Referenznullpunkt zu bewegen;
als Reaktion auf den Erhalt von voreingestellten Installationsinformationen einer neuen Zielbatterie (140), Steuern der Positionierungseinstellbaugruppen (110), um die Startpositionsinformationen des eingestellten Elements (121) neu zu bestimmen;
Neubestimmen von Zielpositionsinformationen, um eine Zielbewegungsdistanz (B) basierend auf den neu bestimmten Startpositionsinformationen des eingestellten Elements (121) und den neu bestimmten Zielpositionsinformationen neu zu bestimmen, wobei die neu bestimmten Zielpositionsinformationen basierend auf den voreingestellten Installationsinformationen der neuen Zielbatterie (140) bestimmt werden; und
Steuern der Positionierungseinstellbaugruppen (110), um das eingestellte Element (121) auf der Grundlage der neu bestimmten Zielbewegungsdistanz (B) in eine neue Zielposition zu bewegen.

11. Positionierungseinstellvorrichtung mit mindestens einem Steuerprozessor (1320) und einem Speicher (1310) zur Kommunikation mit dem mindestens einen Steuerprozessor (1320), **dadurch gekennzeichnet, dass** in dem Speicher (1310) Anweisungen gespeichert sind, die von dem mindestens einen Steuerprozessor (1320) ausgeführt werden können, um den mindestens einen Steuerprozessor (1320) in die Lage zu versetzen, das Verfahren zur Einstellung der Positionierung nach einem der Ansprüche 1 bis 5 durchzuführen.

12. Formations- und Kapazitätssortiervorrichtung, die die Positionierungseinstellvorrichtung nach Anspruch 11 oder das Positionierungswerkzeug nach einem der Ansprüche 6 bis 10 umfasst.

13. Computerlesbares Speichermedium, **dadurch gekennzeichnet, dass** auf dem computerlesbaren Speichermedium computerausführbare Befehle gespeichert sind, die einen Computer in die Lage versetzen, das Verfahren zur Einstellung der Positionierung nach einem der Ansprüche 1 bis 5 durchzuführen.

## Revendications

1. Méthode d'ajustement du positionnement, comprenant
déterminer les informations de position de départ d'un élément ajusté (121) ;
déterminer des informations de position cible pour déterminer une distance de déplacement cible (B) sur la base des informations de position cible et des informations de position de départ de l'élément ajusté (121), les informations de position cible étant déterminées sur la base d'informations d'installation prédéfinies d'une batterie cible (140) ; et
déplacer l'élément ajusté (121) vers une position cible sur la base de la distance de déplacement cible (B) ;
**caractérisée en ce que** la détermination des informations de position de départ de l'élément ajusté (121) comprend :
obtenir une première information de positionnement et une deuxième information de positionnement, la première information de positionnement étant une information de position d'une extrémité de l'élément ajusté (121), et la deuxième information de positionnement étant une information de position de l'autre extrémité de l'élément ajusté (121) ;
déterminer des informations de différence de position de l'élément ajusté (121) sur la base des premières informations de positionnement et des deuxièmes informations de positionnement, les informations de différence de position étant configurées pour indiquer si ladite extrémité et l'autre extrémité de l'élément ajusté (121) sont alignées l'une par rapport à l'autre ;
en réponse aux informations de différence de position indiquant que ladite extrémité et l'autre extrémité de l'élément ajusté (121) ne sont pas alignées l'une avec l'autre, corriger l'élément ajusté (121) pour aligner ladite extrémité et l'autre extrémité de l'élément ajusté (121) ; et
déterminer les informations de position de l'élément ajusté corrigé (121) comme étant les informations de position de départ de l'élément ajusté (121).

2. Méthode d'ajustement du positionnement selon la revendication 1, dans laquelle les informations d'installation prédéfinies comprennent des informations de position centrale de la batterie cible (140), des informations de position relative à la fois d'un élément d'actionnement (131) de l'élément ajusté (121) et d'une structure de positionnement (130) de l'élément ajusté (121), et des informations de position relative à la fois d'un point d'actionnement de la batterie cible (140) et du centre de la batterie cible (140).

3. Méthode d'ajustement du positionnement selon la revendication 2, dans laquelle un point zéro de référence est prévu dans une direction de déplacement de l'élément ajusté (121) et d'un côté d'une plage de déplacement de l'élément ajusté (121).

4. Méthode d'ajustement du positionnement selon la revendication 3, dans laquelle la détermination des informations de position cible comprend :
déterminer une première distance (A) sur la base du point zéro de référence et des informations de position centrale de la batterie cible (140) ;
déterminer une deuxième distance (C) sur la base des informations de position relatives à la fois de l'élément d'actionnement (131) et de la structure de positionnement (130) ;
déterminer une troisième distance (D) sur la base des informations de position relatives à la fois du point d'actionnement et du centre de la batterie cible (140) ; et
déterminer les informations de position cible sur la base de la première distance (A), de la deuxième distance (C) et de la troisième distance (D).

5. Méthode d'ajustement du positionnement selon la revendication 4, dans laquelle la détermination des informations de position cible comprend :
à condition qu'un point d'actionnement cible correspondant à l'élément d'actionnement (131) de l'élément ajusté (121) soit une borne de batterie (141) située à une extrémité proximale du point zéro de référence et que l'élément d'actionnement (131) de l'élément ajusté (121) soit situé sur un côté de la structure de positionnement (130) éloigné du point zéro de référence, obtenir les informations de position cible en soustrayant à la fois la deuxième distance (C) et la troisième distance (D) de la première distance (A) ; ou
à condition que le point d'actionnement cible correspondant à l'élément d'actionnement (131) de l'élément ajusté (121) soit une autre borne de batterie (141) située à une extrémité distale du point zéro de référence et que l'élément d'actionnement (131) de l'élément ajusté (121) soit situé sur un côté de la structure de positionnement (130) proche du point zéro de référence, obtenir les informations de position cible en additionnant la première distance (A), la deuxième distance (C) et la troisième distance (D) ; ou
à condition que le point d'actionnement cible correspondant à l'élément d'actionnement (131) de l'élément ajusté (121) soit situé entre le centre de la batterie cible (140) et une borne de batterie (141) située à l'extrémité proximale du point zéro de référence et que l'élément d'actionnement (131) de l'élément ajusté (121) soit situé sur un côté de la structure de positionnement (130) proche du point zéro de référence, obtenir les informations de position cible en soustrayant la troisième distance (D) d'une somme de la première distance (A) et de la deuxième distance (C).

6. Outil de positionnement, configuré pour ajuster un élément ajusté (121) afin d'adapter l'élément ajusté (121) à une position de batterie, dans lequel l'outil de positionnement comprend un ou plusieurs ensembles d'ajustement de positionnement (110) et un dispositif de commande configuré pour :
commander les ensembles d'ajustement de positionnement (110) pour qu'ils se déplacent à partir d'un point zéro de référence afin de déterminer les informations de position de départ de l'élément ajusté (121) à condition que les ensembles d'ajustement de positionnement (110) détectent l'élément ajusté (121) ;
déterminer des informations de position cible pour déterminer une distance de déplacement cible (B) sur la base des informations de position cible et des informations de position de départ de l'élément ajusté (121), les informations de position cible étant déterminées sur la base d'informations d'installation prédéfinies d'une batterie cible (140) ; et
commander les ensembles d'ajustement de positionnement (110) pour déplacer l'élément ajusté (121) vers une position cible sur la base de la distance de déplacement cible (B) ;
**caractérisé en ce que** les ensembles d'ajustement de positionnement (110) comprennent un premier ensemble d'ajustement de positionnement (113) et un deuxième ensemble d'ajustement de positionnement (114), le premier ensemble d'ajustement de positionnement (113) et le deuxième ensemble d'ajustement de positionnement (114) étant pourvus respectivement d'ensembles d'entraînement, les ensembles d'entraînement comprenant un premier ensemble d'entraînement et un deuxième ensemble d'entraînement, le premier ensemble d'entraînement et le deuxième ensemble d'entraînement étant respectivement montés sur les côtés opposés de l'outil de positionnement et pourvus d'un capteur (111), et les deux extrémités de l'élément ajusté (121) étant pourvues d'une structure de positionnement (130), et le dispositif de commande étant en outre configuré pour :
obtenir une première information de positionnement et une deuxième information de positionnement, la première information de positionnement étant une information de position d'une extrémité de l'élément ajusté (121) obtenue en réponse à la détection de la structure de positionnement (130) par le capteur (111) du premier ensemble d'ajustement de positionnement (113), et la deuxième information de positionnement étant une information de position de l'autre extrémité de l'élément ajusté (121) obtenue en réponse à la détection de la structure de positionnement (130) par le capteur (111) du deuxième ensemble d'ajustement de positionnement (114) ;
déterminer des informations de différence de position sur la base des premières informations de positionnement et des deuxièmes informations de positionnement, les informations de différence de position étant configurées pour indiquer si ladite extrémité et l'autre extrémité de l'élément ajusté (121) sont alignées l'une par rapport à l'autre ;
en réponse aux informations de différence de position indiquant que ladite extrémité et l'autre extrémité de l'élément ajusté (121) ne sont pas alignées l'une avec l'autre, commander le premier ensemble d'entraînement et le deuxième ensemble d'entraînement pour entraîner les ensembles d'ajustement de positionnement respectifs (110) à déplacer uniquement ladite extrémité et l'autre extrémité de l'élément ajusté (121) pour la correction afin d'aligner ladite extrémité et l'autre extrémité de l'élément ajusté (121) ; et
déterminer les informations de position de la structure de positionnement corrigée (130) comme étant les informations de position de départ de l'élément ajusté (121).

7. Outil de positionnement selon la revendication 6, dans lequel les informations d'installation prédéfinies comprennent des informations de position centrale de la batterie cible (140), des informations de position relative à la fois d'un élément d'actionnement (131) de l'élément ajusté (121) et de la structure de positionnement (130) de l'élément ajusté (121), et des informations de position relative à la fois d'un point d'actionnement de la batterie cible (140) et du centre de la batterie cible (140), un point zéro de référence étant prévu dans une direction de déplacement de l'élément ajusté (121) et d'un côté d'une plage de déplacement de l'élément ajusté (121), et le dispositif de commande étant en outre configuré pour :
déterminer une première distance (A) sur la base du point zéro de référence et des informations de position centrale de la batterie cible (140) ;
déterminer une deuxième distance (C) sur la base des informations de position relatives à la fois de l'élément d'actionnement (131) et de la structure de positionnement (130) ;
déterminer une troisième distance (D) sur la base des informations de position relatives à la fois du point d'actionnement et du centre de la batterie cible (140) ; et
déterminer les informations de position cible sur la base de la première distance (A), de la deuxième distance (C) et de la troisième distance (D).

8. Outil de positionnement selon la revendication 7, dans lequel le dispositif de commande est en outre configuré pour :
à condition qu'un point d'actionnement cible correspondant à l'élément d'actionnement (131) de l'élément ajusté (121) soit une borne de batterie (141) située à une extrémité proximale du point zéro de référence et que l'élément d'actionnement (131) de l'élément ajusté (121) soit situé sur un côté de la structure de positionnement (130) éloigné du point zéro de référence, obtenir les informations de position cible en soustrayant à la fois la deuxième distance (C) et la troisième distance (D) de la première distance (A) ; ou
à condition que le point d'actionnement cible correspondant à l'élément d'actionnement (131) de l'élément ajusté (121) soit une autre borne de batterie (141) située à une extrémité distale du point zéro de référence et que l'élément d'actionnement (131) de l'élément ajusté (121) soit situé sur un côté de la structure de positionnement (130) proche du point zéro de référence, obtenir les informations de position cible en additionnant la première distance (A), la deuxième distance (C) et la troisième distance (D) ; ou
à condition que le point d'actionnement cible correspondant à l'élément d'actionnement (131) de l'élément ajusté (121) soit situé entre le centre de la batterie cible (140) et une borne de batterie (141) située à l'extrémité proximale du point zéro de référence et que l'élément d'actionnement (131) de l'élément ajusté (121) soit situé sur un côté de la structure de positionnement (130) proche du point zéro de référence, obtenir les informations de position cible en soustrayant la troisième distance (D) d'une somme de la première distance (A) et de la deuxième distance (C).

9. Outil de positionnement selon la revendication 7, dans lequel, après que l'élément ajusté (121) a été déplacé vers la position cible, le dispositif de commande est en outre configuré pour :
déterminer les informations de position de départ d'un nouvel élément ajusté (121) à condition que les ensembles d'ajustement de positionnement (110) détectent le nouvel élément ajusté (121) ;
déterminer de nouvelles informations de position cible pour déterminer une nouvelle distance de déplacement cible (B) sur la base des nouvelles informations de position cible et des informations de position de départ du nouvel élément ajusté (121), les nouvelles informations de position cible étant déterminées sur la base des informations d'installation prédéfinies de la batterie cible (140) ; et
commander les ensembles d'ajustement de positionnement (110) pour déplacer le nouvel élément ajusté (121) vers une nouvelle position cible sur la base de la nouvelle distance de déplacement cible (B).

10. Outil de positionnement selon la revendication 7, dans lequel, après que l'élément ajusté (121) a été déplacé à la position cible par les ensembles d'ajustement de positionnement (110), le dispositif de commande est en outre configuré pour :
commander les ensembles d'ajustement de positionnement (110) pour les déplacer vers le point zéro de référence ;
en réponse à l'obtention d'informations d'installation prédéfinies d'une nouvelle batterie cible (140), commander les ensembles d'ajustement de positionnement (110) pour redéterminer les informations de position de départ de l'élément ajusté (121) ;
redéterminer des informations de position cible pour redéterminer une distance de déplacement cible (B) sur la base des informations de position de départ redéterminées de l'élément ajusté (121) et des informations de position cible redéterminées, les informations de position cible redéterminées étant déterminées sur la base des informations d'installation prédéfinies de la nouvelle batterie cible (140) ; et
commander les ensembles d'ajustement de positionnement (110) pour déplacer l'élément ajusté (121) vers une nouvelle position cible sur la base de la distance de déplacement cible redéterminée (B).

11. Appareil d'ajustement du positionnement, comprenant au moins un processeur de commande (1320) et une mémoire (1310) pour communiquer avec ledit au moins un processeur de commande (1320) ; **caractérisé en ce que** la mémoire (1310) stocke des instructions exécutables par ledit au moins un processeur de commande (1320) pour amener ledit au moins un processeur de commande (1320) à exécuter la méthode d'ajustement du positionnement selon l'une quelconque des revendications 1 à 5.

12. Dispositif de tri de formation et de capacité, comprenant l'appareil d'ajustement du positionnement selon la revendication 11 ou l'outil de positionnement selon l'une quelconque des revendications 6 à 10.

13. Support de stockage lisible par ordinateur, **caractérisé en ce que** le support de stockage lisible par ordinateur contient des instructions exécutables par ordinateur permettant à un ordinateur d'exécuter la méthode d'ajustement du positionnement selon l'une quelconque des revendications 1 à 5.
